(19) Europäisches Patentamt
European Patent Office
Office européen des brevets

(11) **EP 1 473 886 B1**

(12) **EUROPEAN PATENT SPECIFICATION**

(45) Date of publication and mention
of the grant of the patent:
**19.07.2017 Bulletin 2017/29**

(51) Int Cl.:
***H04W 72/12*** (2009.01)

(21) Application number: **04007863.6**

(22) Date of filing: **31.03.2004**

(54) **Fair scheduling with guaranteed minimum parameter**

Faire Verteilung mit garantierten Mindestparametern

Ordonnancement équitable avec paramètres minimum garantis

(84) Designated Contracting States:
**AT BE BG CH CY CZ DE DK EE ES FI FR GB GR HU IE IT LI LU MC NL PL PT RO SE SI SK TR**

(30) Priority: **30.04.2003 EP 03009923
30.06.2003 US 608158**

(43) Date of publication of application:
**03.11.2004 Bulletin 2004/45**

(73) Proprietor: **Nokia Solutions and Networks Oy
02610 Espoo (FI)**

(72) Inventor: **Pedersen, Klaus Ingemann
9000 Aalborg (DK)**

(74) Representative: **Borgström, Markus et al
Nokia Solutions and Networks GmbH & Co. KG
T&I IPR Patent Administration
St.-Martin-Straße 76
80240 München (DE)**

(56) References cited:
**US-A1- 2002 183 066    US-A1- 2003 039 213
US-A1- 2003 067 935**

• **KUENYOUNG KIM ET AL: "A proportionally fair scheduling algorithm with QoS and priority in 1XEV-DO" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 5, 15 September 2002 (2002-09-15), pages 2239-2243, XP010614126 ISBN: 0-7803-7589-0**

**Description**

<u>FIELD OF THE INVENTION</u>

The present invention relates to a scheduling method and apparatus for scheduling data packets in time-shared channels of e.g. wireless networks.

<u>BACKGROUND OF THE INVENTION</u>

To satisfy increasing demands for high-speed packet data, emerging standards for next-generation DS-CDMA (Direct Sequence Code Division Multiple Access) systems are currently extended to cope with higher data rates. Both suggested High Data Rate (HDR) and High Speed Downlink Packet Access (HSDPA) modes consider a time-divided downlink. One key issue for better utilization of scarce radio resources is an appropriate scheduling of users in order to enhance the throughput. Hence, rate control and time-division scheduling algorithms are used in forwarding packet data transmission to utilize the radio resource effectively and support the high transmission rate.

Employing an efficient packet scheduling algorithm is an essential technique in order to improve the total system throughput as well as the peak throughput of each access user. Although always scheduling the user with the highest link quality may maximise capacity, it can result in a performance too unfair among the users. In the RR (Round Robin) method, the packet transmission opportunities are equally assigned to all communicating users within a sector irrespective of the radio link conditions of each user. However, the total system throughput with this RR scheduler becomes much lower than with other scheduling methods. So far, efficient packet scheduling algorithms have been proposed that assign a slot to the access users within a cell based on the radio link conditions which an access user notifies to the base station. A good scheduling algorithm may guarantee the fairness or the QoS of each service while considering the time-varying channel conditions of each user.

Such fairness issues have been studied for many type of systems, not only wireless. For example, in "Asymptotic analysis of proportional fair algorithm" by J.M. Holtzman, Proc. IEEE PIMRIC, vol. 2, pp. 33-37, 2001, the purpose was to schedule the users to get access to the channel the same asymptotical fraction of time but taking advantage of instantaneous channel variations. According to this asymptotical analysis of scheduling, fairness accounts for providing certain channel access time fractions among the users. That is, equal expected throughput is not necessarily guaranteed, rather the access to the channel.

The proportional fair scheduling method assigns transmission packets based on criteria such as a ratio between an instantaneous signal-to-interference power ratio (SIR) and a long-term average SIR value of each user. Another well-known proportional fair scheduling algorithm is the so-called proportional fair throughput (PFT) algorithm which provides a trade-off between throughput maximisation and fairness among users within a cell. In the traditional framework, the PFT algorithm selects the user to be scheduled during the next transmission time interval (TTI) according to a priority metric, which can be expressed as:

$$P_n = R_n/T_n$$

for a user numbered n, where $R_n$ denotes the throughput which can be offered to user n during the next TTI where this user is scheduled, and $T_n$ denotes the mean or average throughput delivered to this user within a predetermined time period. It is noted that the value $R_n$ is typically time-variant as it depends on the SIR value of this user. The priority metric $P_n$ is calculated for all users sharing the time-multiplexed channel, e.g. the Downlink Shared Channel (DSCH) or the High Speed Downlink Shared Channel (HS-DSCH) as described in the 3GPP (third generation Partnership Project) specification TS 25.308 V5.4.0.

The user with the largest calculated or determined priority metric is selected to be scheduled during the next TTI. Hence, if the user n has not been scheduled for a long period of time, the monitored average throughput $T_n$ will decrease and consequently cause an increase of the priority $P_n$ of said user.

However, so far, the PFT algorithm does not include any mechanism which helps to guarantee a minimum average throughput to a single user in the system. The same applies to other proportional fair scheduling schemes based on other transmission parameters.

US 2003/0067935 A1 discloses a so-called primal ascent scheduling that can be used in place of a proportional fair scheduling to schedule times at which particular users are served within a time multiplexing scheme of a HDR air interface. The primal ascent scheduling evaluates a net change in an objective function that would result from serving each user by a required amount for a given service interval. The objective function depends on a set of utility functions associated with candidates for service, i.e. users competing for the HDR air interface. The utility functions assigned to the users may be modified using so-called barrier functions that place constraints on upper or lower throughput. Another example can be found in document US2003/039213.

SUMMARY OF THE INVENTION

It is an object of the present invention to provide an improved fair scheduling mechanism, by means of which a minimum value of a scheduling parameter can be guaranteed to each of the system users.
This object is achieved by a scheduling method of scheduling data packets in time-shared channels, said method comprising the steps of :

-    determining a scheduling priority for a user based on a ratio between a transmission parameter offered to said user and an average preceding value of said transmission parameter provided to said user within a predetermined time period; and
-    changing said determined scheduling priority in dependence on a difference between said average preceding value and a minimum average value allocated to said user.

Furthermore, the above object is achieved by a scheduling apparatus for scheduling data packets in time-shared channels, said apparatus comprising:

-    priority determination means for determining a scheduling priority for a user based on a ratio between a transmission parameter offered to said user and an average preceding value of said transmission parameter provided to said user within a predetermined time period; and
-    priority change means for changing said determined scheduling priority independence on a difference between said average preceding value and a minimum average value allocated to said user.

Accordingly, when the monitored average parameter value decreases and converges to the minimum guaranteed parameter value, the scheduling priority of the specific user is increased to thereby increase the scheduling probability for this user. Users with low monitored average throughput are thus prioritized so as to guarantee their allocated minimum average value. Thereby, an attractive scheduling mechanism is presented, which partly aims at maximizing the transmission parameter of the concerned cell by monitoring the instantaneous possible value of the transmission parameter to all users, while still providing a minimum fairness among the users specified by their minimum guaranteed average values.
The priority changing step may comprise the step of using a mapping function for mapping the average preceding value to a reduced value based on a difference between the average preceding value and the allocated minimum average value. In particular, the mapping function may be configured to provide the reduced value if the average preceding value falls below a predetermined value higher than the allocated minimum average value. By means of the proposed mapping function, a desired system behaviour can be selected, which describes the system when the average value of the transmission parameter converges to the guaranteed minimum average value. The selection of the predetermined value determines a threshold for the start of the proposed priority increase for a specific user.
The mapping function may be configured to set said reduced value to zero if the average preceding value is less than or equal to the allocated minimum average value. In this case, the priority of the concerned user reaches infinity as soon as the average value of the transmission parameter has reached the minimum average value. This assures, that the data packets of the concerned user will be scheduled in the next TTI, provided that the total channel capacity is high enough.
The mapping function may be a piecewise linear function, the piecewise linear function may provide a one-to-one mapping if the average preceding value is greater than or equal to the predetermined value, and a linear decreasing mapping if the average preceding value is less than the predetermined value but greater than or equal to the allocated minimum average value. Such a mapping function ensures that no priority change is obtained for average values above the predetermined value. However, when the monitored average value has reached and falls below the predetermined value, the priority will continuously increase with falling average value, to provide a continuously increasing scheduling priority for the concerned user.
If there are users for which the same scheduling priority has been determined, these users may be served in a random order, e.g. according to the RR or another suitable random scheduling mechanism. This assures that the proposed mechanism will still continue to serve the users according to their priority metric, even if the total capacity of the shared channel is too small to fulfil the minimum requirements for all users. This feature is useful especially in those cases where the priority is set to infinity when the monitored average value of the transmission parameter has reached or falls below the guaranteed minimum value.
The transmission parameter may be the throughput of the channel allocated to said user. Of course, the proposed invention can be used in connection with other transmission parameters, e.g. SIR value, suitable for fair scheduling mechanisms.

Furthermore, disabling means may be provided for disabling the proposed priority change mechanism so as to provide the conventional fair scheduling mechanism without guaranteed minimum average transmission parameter. This disabling function may be based on switching means for bypassing the corresponding priority change means.

Further advantageous modifications are defined in the dependent claims.

BRIEF DESCRIPTION OF THE DRAWINGS

In the following, the present invention will be described in greater detail based on preferred embodiments with reference to the accompanying drawings, in which:

Fig. 1 shows a schematic functional block diagram of a MAC-hs unit with a packet scheduler in which the preferred embodiments can be implemented;

Fig. 2 a schematic functional block diagram of a packet scheduling unit according to the preferred embodiments;

Fig. 3 shows a mapping function used for priority changing according to the first preferred embodiment; and

Fig. 4 shows an alternative mapping function for priority changing according to a second preferred embodiment.

DESCRIPTION OF THE PREFERRED EMBODIMENTS

The preferred embodiments will now be described based on a Medium Access Control (MAC) architecture for a Node B device of a UMTS Terrestrial Radio Access Network (UTRAN), as described for example in the 3GPPP specification TS 25.308.

HSDPA is based on techniques such as adaptive modulation and Hybrid Automatic Repeat Request (HARQ) to achieve high throughput, reduced delay and high peak rates. It relies on a new type of transport channel, i.e. the High Speed Downlink Shared Channel (HS-DSCH), which is terminated in the Node B. The Node B is the UMTS equivalent to base station in other cellular networks.

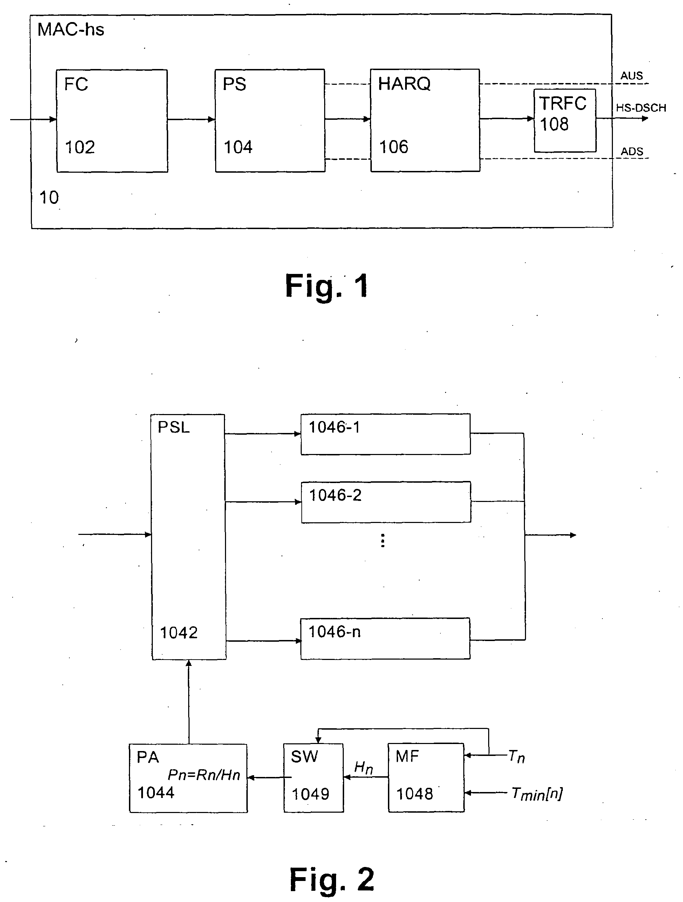

The new functionalities of HARQ and HS-DSCH scheduling are included in the MAC layer. In the UTRAN, these functions are included in a new entity called MAC-hs 10 located in the Node B and schematically depicted in Fig. 1.

The transport channel HS-DSCH is controlled by the MAC-hs 10. For each TTI of the HS-DSCH, each shared control channel (HS-SCCH) carries HS-DSCH related downlink signalling for one user equipment (UE) which is the UMTS equivalent to the mobile station or mobile terminal in other cellular networks. Data received on the HS-DSCH is mapped to the MAC-hs 10. The MAC-hs 10 is configured by a Radio Resource Control (RRC) function to set the parameters according to the allowed transport format combinations for the HS-DSCH. Associated downlink signalling (ADS), e.g. associated Dedicated Physical Channel (DPCH), carries information for supporting the HS-DSCH and associated uplink signalling (AUS) carries feedback information. As to the AUS, it may be distinguished between the associated DPCH and the HS-DPCCH (High Speed Dedicated Physical Control Channel) which is the channel carrying the acknowledgements for packet data units (PDUs) received on the HS-DSCH. If a HS-DSCH is assigned to the concerned UE, PDUs to be transmitted are transferred to the MAC-hs 10 via respective lu interfaces to provide the required scheduling function for the common HS-DSCH.

The MAC-hs 10 is responsible for handling the data transmitted on the HS-DSCH. Furthermore, it is responsible for the management of physical resources allocated to the HS-DSCH. To achieve this, the MAC-hs 10 receives configuration parameters via messages of the Node B Application Part (NBAP).

According to Fig. 1, the MAC-hs 10 comprises four different functional entities. A flow control unit 102 provides a flow control function intended to limit layer 2 signalling latency and reduce discarded and transmitted data as a result of HS-DSCH congestion. Flow control is provided independently per priority class for each MAC flow. Furthermore, a packet scheduling unit 104 is provided which manages HS-DSCH resources between HARQ entities and data flows according to their priority class. Based on status reports from associated uplink signalling, e.g. HS-DPCCH signalling, either new transmission or retransmission is determined.

signalling, either new transmission or retransmission is determined. Further, the priority class identifiers and transmission sequence numbers are set for each new data block being served. To maintain proper transmission priority, a new transmission can be initiated on a HARQ process at any time. The transmission sequence number is unique to each priority class within a HS-DSCH, and is incremented for each new data block. It is not permitted to schedule new transmissions within the same TTI, along with retransmission originating from the HARQ layer.

A subsequent HARQ unit 106 comprises HARQ entities, wherein each HARQ entity handles the HARQ functionality for one user. One HARQ entity is capable of supporting multiple instances of stop and wait HARQ protocols. In particular, one HARQ process may be provided per TTI.

Finally, a Transport Format Resource Combination (TFRC) selection unit 108 is provided for selecting an appropriate transport format and resource combination for the data to be transmitted on the HS-DSCH.

In the following, the scheduling mechanism in the packet scheduling unit 104 is described in greater detail.

Fig. 2 shows a schematic functional block diagram of the scheduling functionality. Data packets to be scheduled are supplied to a priority selection function 1042 which selects a priority class for each data packed based on a priority information $P_n$ obtained from a priority allocation function 1044 for the concerned user n.

According to the preferred embodiments, the initially described PFT algorithm is modified to change the allocated priority information $P_n$ in dependence on the difference between the monitored average throughput $T_n$ of the concerned user n and the guaranteed minimum average throughput $T_{min}[n]$. In particular, the priority information $P_n$ is generated by the priority allocation function 1044 in such a manner that it is increased when the monitored average throughput $T_n$ converges to the guaranteed minimum average throughput $T_{min}[n]$. This can be achieved by providing a mapping unit 1048 to which the monitored average throughput $T_n$ and the guaranteed minimum average throughput $T_{min}[n]$ are supplied, e.g. from respective determination functions (not shown) provided at the MAC-hs 10, and which generates a modified value $H_n$ replacing the monitored average throughput $T_n$ in the priority calculation according to the PFT algorithm.

Hence, the initially expressed priority metric is now modified and can be expressed as:

$$P_n = R_n/H_n$$

where $H_n = f(T_n; T_{min}[n])$ is a mapping function of the monitored average throughput $T_n$ conditioned on the guaranteed minimum average throughput $T_{min}[n]$ for the user n. The mapping function can be selected or adapted to obtain a desired priority changing behaviour when the monitored average throughput $T_n$ converges to the guaranteed minimum average throughput $T_{min}[n]$.

Optionally, a switching function 1049 may be provided for directly switching the monitored average throughput $T_n$ to the input of the priority allocation function 1044 which calculates the priority information $P_n$ based on the above modified priority metric. The switching function 1049 thus can be used to bypass the mapping function so as to provide a scheduling function according to the conventional PFT algorithm, i.e. $H_n = T_n$.

The priority selection function 1042 is arranged to select one of a plurality of priority buffers 1046-1 to 1046-n to which respective priority clsses are allocated. Data packets supplied to the same priority buffer have the same allocated priority class which is determined based on the priority information Pn supplied from the priority allocation function 1044. Thus, the priority selection function 1042 selects the priority buffer based on the priority information $P_n$ received from the priority allocation function 1044. If more than one data packet is stored or queued in one of the priority buffers 1046-1 to 1046-n at the same TTI, these data packets are scheduled in a random order, e.g. according to an RR algorithm. In Fig. 2, the upper priority buffer 1046-1 may store data packets with the highest priority class, while the lowest buffer 1046-n may store data packets with the lowest priority class. As long as a buffer with a higher priority class stores a data packet, data packets in priority buffers of lower priority classes are not forwarded towards the common HS-DSCH.

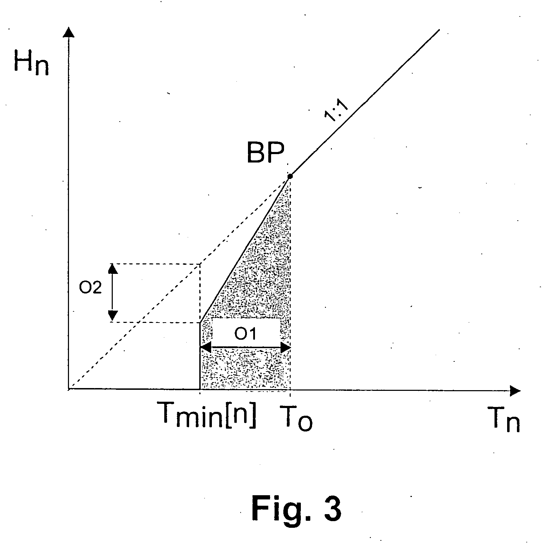

Fig. 3 shows a schematic diagram indicating an example of a mapping function $H_n = f(T_n; T_{min}[n])$ according to the first preferred embodiment.

As can be gathered from Fig. 3, the mapping function according to the first preferred embodiment is a piecewise linear function which provides a one-to-one mapping, i.e. $H_n = T_n$, until the monitored average throughput $T_n$ has decreased to a mapping threshold To defining a break point BP of the mapping function. The mapping threshold $T_o$ is located at a throughput value larger than the guaranteed minimum average throughput $T_{min}[n]$ by a first offset value O1. During the throughput range between the mapping threshold $T_o$ and the guaranteed minimum average throughput $T_{min}[n]$ the slope of the mapping function is increased to provide a linear decreasing mapping until the mapped or reduced throughput value $H_n$ has reached a value of the guaranteed minimum average throughput $T_{min}[n]$, which is lower than the one-to-one mapping value by a second offset value 02. Below the guaranteed minimum average throughput value $T_{min}[n]$, the mapped throughput value $H_n$ is forced to zero, so that the priority allocation function 1044 will calculate a maximum priority information indicating that the priority equals infinity.

The mapping function depicted in Fig. 3 can be described by the following expressions:

$$\text{For } T_n > T_{min}[n] + O1: \qquad H_n = T_n$$

$$\text{For } T_n < T_{min}[n] + O1: \qquad H_n < T_n$$

$$\text{For } T_n < T_{min}[n]: \qquad H_n = 0$$

Hence, once the monitored average throughput $T_n$ starts to converge to the guaranteed minimum average throughput $T_{min}[n]$, the priority metric of the user n is increased by selecting $H_n < T_n$. This is indicated in Fig. 3 by the shaded area, where the priority of users getting close to their guaranteed minimum average throughput $T_{min}[n]$ is increased. Below the guaranteed minimum average value $T_{min}[n]$, the priority metric of the user n is increased to infinity due to the zero value of $H_n$, i.e. the user will be scheduled during the following TTI.

Although the mapping function depicted in Fig. 3 is a piecewise linear function, other functions can be used as well, provided that the function fulfils the criteria $H_n < T_n$ when the monitored average throughput $T_n$ starts to converge to the guaranteed minimum average throughput $T_{min}[n]$.

In cases where the total capacity of the shared channel, e.g. HS-DSCH or HSDPA, is too small to fulfil the guaranteed minimum requirements for all users, the proposed algorithm will still continue to serve the users according to their priority metric. If the mapping function according to the first predetermined embodiment is used during a congestion phase, where the minimum guaranteed throughput requirements cannot be met, all users will have a monitored average throughput $T_n$ which is below the guaranteed minimum average throughput $T_{min}[n]$. Hence, the priority metric for all users will converge towards infinity. In these cases, the same maximum priority class will be allocated to all data packets and the packet scheduling unit 104 will serve the multiple users with the same priority class in random order, i.e. according to an RR algorithm, as already mentioned above. This basically means that the proposed modified PFT algorithm will be reduced to a standard RR algorithm when the mapping function depicted in Fig. 3 is applied and the shared channel is congested.

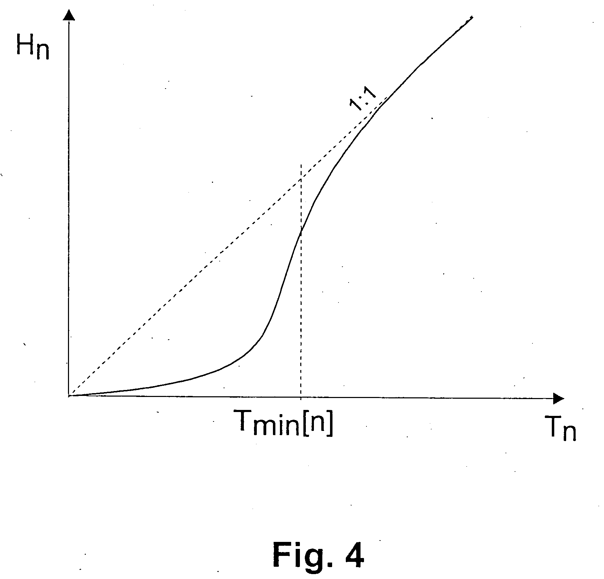

Fig. 4 shows an alternative non-linear mapping function according to the second preferred embodiment.

Here, the mapped average throughput $H_n$ is not reduced to zero below the guaranteed minimum average throughput $Tm_{in}[n]$, so that the priority metric does not converge to infinity once the monitored average throughput becomes lower than the guaranteed minimum average throughput $T_{min}[n]$. This mapping function provides a scheduling property where, during a congestion when the guaranteed minimum average throughput $T_{min}[n]$ cannot be provided, the user with the maximum difference between the guaranteed minimum average throughput $T_{min}[n]$ and the monitored average throughput $T_n$, i.e. $\max\{T_{min}[n] - T_n\}$, is scheduled with a higher probability. Hence, using the mapping function according to the second preferred embodiment, as depicted in Fig. 4, a conversion to the RR scheduling algorithm can be prevented during congestion.

The mapping functions according to the first and second embodiments can be implemented at the mapping unit 1048 e.g. based on a lookup table storing mapped values $H_n$ according to the mapping function and being addressed by the corresponding current values of the monitored average throughput $T_n$ and the guaranteed minimum average throughput $T_{min}[n]$. As an alternative, a processing functionality may be provided at the mapping unit 1048 for calculating the mapped value $H_n$ based on a processing scheme or processing program by which the mapping function is implemented and to which the corresponding current values of the monitored average throughput $T_n$ and the guaranteed minimum average throughput $T_{min}[n]$ are supplied as input values.

The modified fair scheduling mechanism according to the present invention ensures that the guaranteed minimum throughput requirements can be fulfilled for scheduled users on shared channels. By proper selection of the mapping function, the behaviour of the scheduling mechanism during congestion, i.e. in cases where the guaranteed minimum throughput requirements can no longer be fulfilled, can also be efficiently controlled.

It is noted that the present invention is not restricted to the above specific scheduling mechanism based on the throughput as transmission parameter. The present invention can be applied to any scheduling mechanism based on any other suitable transmission parameter, such as SIR values or delay values or the like. Moreover, the present invention can be applied to any DSCH or HSDPA scheduling algorithm or other scheduling algorithms in all kinds of data packet connections. The preferred embodiments may thus vary within the scope of the attached claims.

## Claims

1. A scheduling method of scheduling data packets in time-shared channels of a radio access network, said method comprising the steps of:

   a) Determining (1044) a scheduling priority ($P_n$) for a user based on a ratio between a transmission parameter allocated to said user and an average preceding value of said transmission parameter provided to said user within a predetermined time period; and

b) changing (1048) said determined scheduling priority in dependence on a difference between said average preceding value and a guaranteed minimum average value allocated to said user in a manner such that the scheduling priority ($P_n$) is increased when said average preceding value converges to said guaranteed minimum average value;

wherein the transmission parameter can be one of a throughput, a signal-to-interference power ratio or a delay value.

2. A method according to claim 1, wherein said changing step comprises the step of using a mapping function (1048) for mapping said average preceding value to a reduced value based on said difference between said average preceding value and said allocated guaranteed minimum average value.

3. A method according to claim 2, wherein said mapping function (1048) is configured to provide said reduced value if said average preceding value falls below a predetermined value higher than said allocated guaranteed minimum average value.

4. A method according to claim 2 or 3, wherein said mapping function (1048) is configured to set said reduced value to zero if said average preceding value is less than or equal to said allocated guaranteed minimum average value.

5. A method according to claim 3 or 4, wherein said mapping function (1048) is a piecewise linear function.

6. A method according to claim 5, wherein said piecewise linear function provides a one-to-one mapping if said average preceding value is greater than or equal to said predetermined value, and a linear decreasing mapping if said average preceding value is less than said predetermined value but greater than or equal to said allocated guaranteed minimum average value.

7. A method according to any one of the preceding claims, wherein users for which the same scheduling priority has been determined in said determination step (1044) are served in a random order.

8. A method according to any one of the preceding claims, wherein said scheduling method is used for downlink shared channel packet scheduling in the radio access network.

9. A method according to any one of claims 1 to 7, wherein said scheduling method is used for high speed downlink packet access packet scheduling in a medium access control high-speed unit (10) of a Node B device.

10. A method according to any one of the preceding claims, wherein said transmission parameter is a throughput of a channel allocated to said user.

11. A scheduling apparatus for scheduling data packets in time-shared channels of a radio access network, said apparatus (104) comprising:

a) priority determination means (1044) for determining a scheduling priority ($P_n$) for a user based on a ratio between a transmission parameter allocated to said user and an average preceding value of said transmission parameter provided to said user within a predetermined time period; and

b) priority change means (1048) for changing said determined scheduling priority in dependence on a difference between said average preceding value and a guaranteed minimum average value allocated to said user in a manner such that the scheduling priority ($P_n$) is increased when said average preceding value converges to said guaranteed minimum average value;

wherein the transmission parameter can be one of a throughput, a signal-to-interference power ratio or a delay value.

12. An apparatus according to claim 11, wherein said priority change means comprises mapping means (1048) for mapping said average preceding value to a reduced value based on said difference between said average preceding value and said allocated guaranteed minimum average value.

13. An apparatus according to claim 11 or 12, further comprising disabling means (1049) for disabling said priority change means (1048)

**14.** An apparatus according to claim 13, wherein said disabling means comprises a switching means (1049) for bypassing said priority change means (1048).

**15.** An apparatus according to any one of claims 11 to 14, wherein said scheduling apparatus (1004) is provided in a medium access control high-speed unit (10) of a Node B device.

**Patentansprüche**

**1.** Terminierungsverfahren zum Terminieren von Datenpaketen in zeitlich gestaffelten Kanälen eines Funkzugangsnetzwerks, das Verfahren die folgenden Schritte umfassend:

a) Bestimmen (1044) einer Terminierungspriorität ($P_n$) für einen Benutzer basierend auf einem Verhältnis zwischen einem dem Benutzer zugeteilten Übertragungsparameter und einem durchschnittlichen vorherigen Wert des dem Benutzer bereitgestellten Übertragungsparameters in einer im Voraus bestimmten Zeitperiode; und
b) Verändern (1048) der bestimmten Terminierungspriorität in Abhängigkeit von einer Differenz zwischen dem durchschnittlichen vorherigen Wert und einem garantierten minimalen durchschnittlichen Wert, der dem Benutzer in einer Weise zugeteilt ist, dass die Terminierungspriorität ($P_n$) erhöht wird, wenn sich der durchschnittliche vorherige Wert dem garantierten minimalen durchschnittlichen Wert annähert;

wobei der Übertragungsparameter einer eines Durchsatzes, eines Signal-Rauschleistung-Abstands oder eines Verzögerungswerts sein kann.

**2.** Verfahren nach Anspruch 1, wobei der Schritt des Veränderns den Schritt des Verwendens einer Abbildungsfunktion (1048) zum Abbilden des durchschnittlichen vorherigen Werts auf einen reduzierten Wert basierend auf der Differenz zwischen dem durchschnittlichen vorherigen Wert und dem zugeteilten garantierten minimalen durchschnittlichen Wert umfasst.

**3.** Verfahren nach Anspruch 2, wobei die Abbildungsfunktion (1048) konfiguriert ist, den reduzierten Wert bereitzustellen, wenn der durchschnittliche vorherige Wert unter einen im Voraus bestimmten Wert fällt, der höher ist als der zugeteilte garantierte minimale durchschnittliche Wert.

**4.** Verfahren nach Anspruch 2 oder 3, wobei die Abbildungsfunktion (1048) konfiguriert ist, den reduzierten Wert auf null zu setzen, wenn der durchschnittliche vorherige Wert kleiner als der oder gleich dem zugeteilten garantierten minimalen durchschnittlichen Wert ist.

**5.** Verfahren nach Anspruch 3 oder 4, wobei die Abbildungsfunktion (1048) eine gebietsweise lineare Funktion ist.

**6.** Verfahren nach Anspruch 5, wobei die gebietsweise lineare Funktion eine Eins-zu-eins-Abbildung bereitstellt, wenn der durchschnittliche vorherige Wert größer als der oder gleich dem im Voraus bestimmten Wert ist, und eine linear abnehmende Abbildung, wenn der durchschnittliche vorherige Wert kleiner als der im Voraus bestimmte Wert, aber größer als der oder gleich dem zugeteilten garantierten minimalen durchschnittlichen Wert ist.

**7.** Verfahren nach einem der vorstehenden Ansprüche, wobei Benutzer, für die die gleiche Terminierungspriorität in dem Schritt des Bestimmens (1044) bestimmt wurde, in einer zufälligen Reihenfolge versorgt werden.

**8.** Verfahren nach einem der vorstehenden Ansprüche, wobei das Terminierungsverfahren für abwärtsverbindungsgeteilte Kanalpaketterminierung in dem Funkzugangsnetzwerk verwendet wird.

**9.** Verfahren nach einem der Ansprüche 1 bis 7, wobei das Terminierungsverfahren für Hochgeschwindigkeit-Abwärtsverbindung-Paketzugang-Paketterminierung in einer Mediumzugangssteuerung-Hochgeschwindigkeitseinheit (10) einer NodeB-Vorrichtung verwendet wird.

**10.** Verfahren nach einem der vorstehenden Ansprüche, wobei der Übertragungsparameter ein Durchsatz eines dem Benutzer zugeteilten Kanals ist.

**11.** Terminierungsvorrichtung zum Terminieren von Datenpaketen in zeitlich gestaffelten Kanälen eines Funkzugangsnetzwerks, die Vorrichtung (104) umfassend:

a) Prioritätsbestimmungsmittel (1044) zum Bestimmen einer Terminierungspriorität ($P_n$) für einen Benutzer basierend auf einem Verhältnis zwischen einem dem Benutzer zugeteilten Übertragungsparameter und einem durchschnittlichen vorherigen Wert des dem Benutzer bereitgestellten Übertragungsparameters in einer im Voraus bestimmten Zeitperiode; und

b) Prioritätsveränderungsmittel (1048) zum Verändern der bestimmten Terminierungspriorität in Abhängigkeit von einer Differenz zwischen dem durchschnittlichen vorherigen Wert und einem garantierten minimalen durchschnittlichen Wert, der dem Benutzer in einer Weise zugeteilt ist, dass die Terminierungspriorität ($P_n$) erhöht wird, wenn sich der durchschnittliche vorherige Wert dem garantierten minimalen durchschnittlichen Wert annähert;

wobei der Übertragungsparameter einer eines Durchsatzes, eines Signal-Rauschleistung-Abstands oder eines Verzögerungswerts sein kann.

**12.** Vorrichtung nach Anspruch 11, wobei das Prioritätsveränderungsmittel Abbildungsmittel (1048) zum Abbilden des durchschnittlichen vorherigen Werts auf einen reduzierten Wert basierend auf der Differenz zwischen dem durchschnittlichen vorherigen Wert und dem zugeteilten garantierten minimalen durchschnittlichen Wert umfasst.

**13.** Vorrichtung nach Anspruch 11 oder 12, ferner umfassend Deaktivierungsmittel (1049) zum Deaktivieren des Prioritätsveränderungsmittels (1048).

**14.** Vorrichtung nach Anspruch 13, wobei das Deaktivierungsmittel ein Umschaltmittel (1049) zum Umgehen des Prioritätsveränderungsmittels (1048) umfasst.

**15.** Vorrichtung nach einem der Ansprüche 11 bis 14, wobei die Terminierungsvorrichtung (1004) in einer Mediumzugangssteuerung-Hochgeschwindigkeitseinheit (10) einer NodeB-Vorrichtung bereitgestellt ist.

**Revendications**

**1.** Un procédé de planification destiné à la planification de paquets de données dans des canaux en temps partagé d'un réseau d'accès radio, ledit procédé comprenant les étapes suivantes :

a) la détermination (1044) d'une priorité de planification ($P_n$) pour un utilisateur en fonction d'un rapport entre un paramètre de transmission attribué audit utilisateur et une valeur précédente moyenne dudit paramètre de transmission fournie audit utilisateur à l'intérieur d'une période temporelle prédéterminée, et

b) la modification (1048) de ladite priorité de planification déterminée en fonction d'une différence entre ladite valeur précédente moyenne et une valeur moyenne minimale garantie attribuée audit utilisateur de telle manière que la priorité de planification ($P_n$) soit augmentée lorsque ladite valeur précédente moyenne converge vers ladite valeur moyenne minimale garantie,

dans lequel le paramètre de transmission peut être un élément parmi un débit, un rapport signal sur puissance de brouillage ou une valeur de retard.

**2.** Un procédé selon la revendication 1, dans lequel ladite étape de modification comprend l'étape d'utilisation d'une fonction de mise en correspondance (1048) pour la mise en correspondance de ladite valeur précédente moyenne avec une valeur réduite en fonction de ladite différence entre ladite valeur précédente moyenne et ladite valeur moyenne minimale garantie attribuée.

**3.** Un procédé selon la revendication 2, dans lequel ladite fonction de mise en correspondance (1048) est configurée de façon à fournir ladite valeur réduite si ladite valeur précédente moyenne passe sous une valeur prédéterminée supérieure à ladite valeur moyenne minimale garantie attribuée.

**4.** Un procédé selon la revendication 2 ou 3, dans lequel ladite fonction de mise en correspondance (1048) est configurée de façon à définir ladite valeur réduite sur zéro si ladite valeur précédente moyenne est inférieure ou égale à ladite valeur moyenne minimale garantie attribuée.

**5.** Un procédé selon la revendication 3 ou 4, dans lequel ladite fonction de mise en correspondance (1048) est une fonction linéaire segmentée.

**6.** Un procédé selon la revendication 5, dans lequel ladite fonction linéaire segmentée fournit une mise en correspondance biunivoque si ladite valeur précédente moyenne est supérieure ou égale à ladite valeur prédéterminée, et une mise en correspondance décroissante linéaire si ladite valeur précédente moyenne est inférieure à ladite valeur prédéterminée mais supérieure ou égale à ladite valeur moyenne minimale garantie attribuée.

**7.** Un procédé selon l'une quelconque des revendications précédentes, dans lequel des utilisateurs pour lesquels la même priorité de planification a été déterminée à ladite étape de détermination (1044) sont desservis de manière aléatoire.

**8.** Un procédé selon l'une quelconque des revendications précédentes, dans lequel ledit procédé de planification est utilisé pour une planification de paquets en canal partagé en liaison descendante dans le réseau d'accès radio.

**9.** Un procédé selon l'une quelconque des revendications 1 à 7, dans lequel ledit procédé de planification est utilisé pour une planification de paquets à accès en mode paquets en liaison descendante haut débit dans une unité à haut débit de commande d'accès à un support (10) d'un dispositif de noeud B.

**10.** Un procédé selon l'une quelconque des revendications précédentes, dans lequel ledit paramètre de transmission est un débit d'un canal attribué audit utilisateur.

**11.** Un appareil de planification destiné à la planification de paquets de données dans des canaux en temps partagé d'un réseau d'accès radio, ledit appareil (104) comprenant :

a) un moyen de détermination de priorité (1044) destiné à la détermination d'une priorité de planification ($P_n$) pour un utilisateur en fonction d'un rapport entre un paramètre de transmission attribué audit utilisateur et une valeur précédente moyenne dudit paramètre de transmission fourni audit utilisateur à l'intérieur d'une période temporelle prédéterminée, et

b) un moyen de modification de priorité (1048) destiné à la modification de ladite priorité de planification déterminée en fonction d'une différence entre ladite valeur précédente moyenne et une valeur moyenne minimale garantie attribuée audit utilisateur de telle manière que la priorité de planification ($P_n$) soit augmentée lorsque ladite valeur précédente moyenne converge vers ladite valeur moyenne minimale garantie, dans lequel le paramètre de transmission peut être un paramètre parmi un débit, un rapport signal sur puissance de brouillage ou une valeur de retard.

**12.** Un appareil selon la revendication 11, dans lequel ledit moyen de modification de priorité comprend un moyen de mise en correspondance (1048) destiné à la mise en correspondance de ladite valeur précédente moyenne avec une valeur réduite en fonction de ladite différence entre ladite valeur précédente moyenne et ladite valeur moyenne minimale garantie attribuée.

**13.** Un appareil selon la revendication 11 ou 12, comprenant en outre un moyen de désactivation (1049) destiné à la désactivation dudit moyen de modification de priorité (1048).

**14.** Un appareil selon la revendication 13, dans lequel ledit moyen de désactivation comprend un moyen de commutation (1049) destiné à contourner ledit moyen de modification de priorité (1048).

**15.** Un appareil selon l'une quelconque des revendications 11 à 14, dans lequel ledit appareil de planification (1004) est installé dans une unité à haut débit de commande d'accès à un support (10) d'un dispositif de noeud B.

**Fig. 1**

**Fig. 2**

**Fig. 3**

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030067935 A1

- US 2003039213 A

**Non-patent literature cited in the description**

- **J.M. HOLTZMAN.** Asymptotic analysis of proportional fair algorithm. *Proc. IEEE PIMRIC,* 2001, vol. 2, 33-37